# EUROPEAN PATENT APPLICATION

(11) **EP 2 410 476 A1**
(43) Date of publication of application: **25.01.2012**
(21) Application number: 10170582.0
(22) Date of filing: 23.07.2010
(51) Int. Cl.: G06Q 10/00

(54) **Automatic meeting scheduling and available time display**

(71) Applicant: Research In Motion Limited, Waterloo, ON N2L 3W8 (CA)
(72) Inventor: Ayatollahi, Mina, Waterloo Ontario N2L 3L3 (CA); Garg, Neeraj, Milton Ontario L9T 6N6 (CA); Logan, Adrian Michael, Waterloo Ontario N2L 3L3 (CA)
(74) Representative: Patel, Binesh

(57) **Abstract**

Automatic meeting scheduling may be facilitated without the need to open a calendar application to discuss and discover shared available time. A meeting organizer may send a request to one or more potential meeting participants. Based on responses received from the device of the potential meeting participants, the device of the meeting organizer may determine coincidentally available meeting times. The device may automatically select a candidate meeting time from among the coincidentally available meeting times or may rely on the meeting organizer to select a candidate meeting time from among the coincidentally available meeting times. Typical meeting scheduling may then ensue.

## Description

The present application relates generally to personal information management and, more specifically, to automatic meeting scheduling and available time display.

In the current age, portable computing power has reached a level that allows personal information managers to be carried by many technology-savvy business people. Such personal information managers allow people to maintain an up-to-date set of records that include records of contact information and records of scheduled appointments.

In a common scenario, two or more people are having a conversation and discover a need to schedule a meeting. Each of the potential participants in the to-be-scheduled meeting may consult their personal information manager to determine available time slots. They may then share their available time slots verbally in the conversation and, based on the conversation, settle upon an available time slot that is coincident for all of the potential participants in the meeting. Once the potential participants in the to-be-scheduled meeting have settled upon a commonly available time slot, each the potential participants in the to-be-scheduled meeting may insert a new record in their respective personal information mangers to indicate that the commonly available time slot is booked for the meeting. Alternatively, one of the potential participants in the to-be-scheduled meeting locates an available time slot and sends a meeting invitation to the other potential participants. An other of the other potential participants may find that the proposed time conflicts with an already scheduled appointment and may correspondingly reject the meeting invitation. In conjunction with rejecting the proposed meeting time slot, the other of the other potential participants may propose a new time slot for the meeting, where the new time slot is selected from among available time slots in the personal information manager of the other of the other potential participants. Such meeting time slot rejection and new time proposition may continue for many iterations before a common available time slot is settled upon.

Advantageously, personal computer applications can share availability information across a common server such that a meeting organizer can view available time slots for potential meeting participants and schedule a meeting accordingly. Unfortunately, it may be the case that not all of the potential meeting participants are sharing availability information across the common server. Furthermore, such an availability view is largely restricted to the personal computer environment and has not been widely deployed to handheld personal information managing devices.

### GENERAL

Automatic meeting scheduling may be facilitated without the need to open a calendar application to discuss and discover shared available time. A meeting organizer may send a request to one or more potential meeting participants. Based on responses received from the device of the potential meeting participants, the device of the meeting organizer may determine coincidentally available meeting times. The device may automatically select a candidate meeting time from among the coincidentally available meeting times or may rely on the meeting organizer to select a candidate meeting time from among the coincidentally available meeting times. Typical meeting scheduling may then ensue.

According to an aspect of the present disclosure, there is provided a method of meeting scheduling. The method includes transmitting a request, the request prompting a recipient device to formulate and return a response, receiving the response, the response including an indication of an available recipient meeting time, determining a candidate meeting time, the candidate meeting time coincident with the available recipient meeting time and an available meeting organizer meeting time and initiating insertion of a meeting record into a data-store, the meeting record specifying the candidate meeting time. In other aspects of the present application, a processor is provided for carrying out this method and a computer readable medium is provided for adapting a processor in an apparatus to carry out this method.

Other aspects and features of the present disclosure will become apparent to those of ordinary skill in the art upon review of the following description of specific embodiments of the disclosure in conjunction with the accompanying figures.

### BRIEF DESCRIPTION OF THE DRAWINGS

Reference will now be made, by way of example, to the accompanying drawings which show example implementations; and in which:

FIG. 1 illustrates a mobile communication device;

FIG. 2 illustrates example steps in a method of facilitating meeting scheduling for carrying out on the mobile communication device of FIG. 1, according to an implementation of the present disclosure;

FIG. 3 illustrates an example request format for transmission in the method of FIG. 2, according to an implementation of the present disclosure;

FIG. 4 illustrates example steps in a method of formulating a response responsive to receipt of the request transmitted in the method of FIG. 2, according to an implementation of the present disclosure;

FIG. 5 illustrates an example response format for transmission in the method of FIG. 4, according to an implementation of the present disclosure;

FIG. 6 illustrates example steps in an alternate method of facilitating meeting scheduling for carrying out on the mobile communication device of FIG. 1, according to an implementation of the present disclosure;

FIG. 7 illustrates an example request format for transmission in the method of FIG. 6, according to an implementation of the present disclosure; and

FIG. 8 illustrates an example availability response format received in the method of FIG. 7, according to an implementation of the present disclosure.

### DESCRIPTION OF PREFERRED EMBODIMENTS

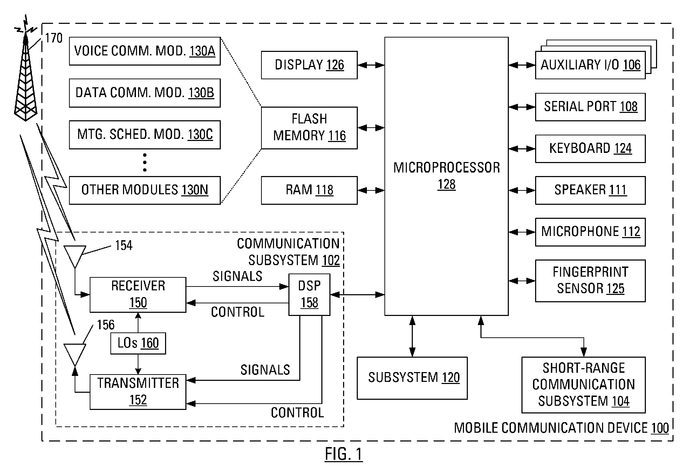

FIG. 1 illustrates a mobile communication device 100 as an example of a device that may carry out the methods disclosed hereinafter. The mobile communication device 100 includes a housing, an input device (e.g., a keyboard 124 having a plurality of keys) and an output device (e.g., a display 126), which may comprise a full graphic, or full color, Liquid Crystal Display (LCD). In some embodiments, the display 126 may comprise a touchscreen display. In such embodiments, the keyboard 124 may comprise a virtual keyboard. Other types of output devices may alternatively be utilized. A processing device (a microprocessor 128) is shown schematically in FIG. 1 as coupled between the keyboard 124 and the display 126. The microprocessor 128 controls the operation of the display 126, as well as the overall operation of the mobile communication device 100, in part, responsive to actuation of the keys on the keyboard 124 by a user.

The housing may be elongated vertically, or may take on other sizes and shapes (including clamshell housing structures). In the case in which the keyboard 124 includes keys that are associated with at least one alphabetic character and at least one numeric character, the keyboard 124 may include a mode selection key, or other hardware or software, for switching between alphabetic entry and numeric entry.

In addition to the microprocessor 128, other parts of the mobile communication device 100 are shown schematically in FIG. 1. These may include a communications subsystem 102, a short-range communications subsystem 104, the keyboard 124 and the display 126. The mobile communication device 100 may further include other input/output devices, such as a set of auxiliary I/O devices 106, a serial port 108, a speaker 111 and a microphone 112. The mobile communication device 100 may further include memory devices including a flash memory 116 and a Random Access Memory (RAM) 118 and various other device subsystems 120. The mobile communication device 100 may comprise a two-way radio frequency (RF) communication device having voice and data communication capabilities. In addition, the mobile communication device 100 may have the capability to communicate with other computer systems via the Internet.

Operating system software executed by the microprocessor 128 may be stored in a computer readable medium, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 128, in addition to its operating system functions, enables execution of software applications on the mobile communication device 100. A predetermined set of software applications that control basic device operations, such as a voice communications module 130A and a data communications module 130B, may be installed on the mobile communication device 100 during manufacture. A meeting scheduling module 130C may also be installed on the mobile communication device 100 during manufacture, to implement aspects of the present disclosure. As well, additional software modules, illustrated as an other software module 130N, which may be, for instance, a PIM application, may be installed during manufacture. The PIM application may be capable of organizing and managing data items, such as e-mail messages, contact records, calendar events, voice mail messages, appointments and task items. The PIM application may also be capable of sending and receiving data items via a wireless carrier network 170 represented by a radio tower. The data items managed by the PIM application may be seamlessly integrated, synchronized and updated via the wireless carrier network 170 with the device user's corresponding data items stored or associated with a host computer system.

Communication functions, including data and voice communications, are performed through the communication subsystem 102 and, possibly, through the short-range communications subsystem 104. The communication subsystem 102 includes a receiver 150, a transmitter 152 and one or more antennas, illustrated as a receive antenna 154 and a transmit antenna 156. In addition, the communication subsystem 102 also includes a processing module, such as a digital signal processor (DSP) 158, and local oscillators (LOs) 160. The specific design and implementation of the communication subsystem 102 is dependent upon the communication network in which the mobile communication device 100 is intended to operate. For example, the communication subsystem 102 of the mobile communication device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, may also be utilized with the mobile communication device 100.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When network registration or activation procedures have been completed, the mobile communication device 100 may send and receive communication signals over the wireless carrier network 170. Signals received from the wireless carrier network 170 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the wireless carrier network 170 are processed (e.g., ., modulated and encoded) by the DSP 158 and are then provided to the transmitter 152 for digital to analog conversion, frequency up conversion, filtering, amplification and transmission to the wireless carrier network 170 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 102 and is input to the microprocessor 128. The received signal is then further processed by the microprocessor 128 for output to the display 126, or alternatively to some auxiliary I/O devices 106. A device user may also compose data items, such as e-mail messages, using the keyboard 124 and/or some other auxiliary I/O device 106, such as a touchpad, a rocker switch, a thumb-wheel, a trackball, a touchscreen, or some other type of input device. The composed data items may then be transmitted over the wireless carrier network 170 via the communication subsystem 102.

In a voice communication mode, overall operation of the device is substantially similar to the data communication mode, except that received signals are output to the speaker 111, and signals for transmission are generated by a microphone 112. Alternative voice or audio I/O subsystems, such as a voice message recording subsystem, may also be implemented on the mobile communication device 100. In addition, the display 126 may also be utilized in voice communication mode, for example, to display the identity of a calling party, the duration of a voice call, or other voice call related information.

The short-range communications subsystem 104 enables communication between the mobile communication device 100 and other proximate systems or devices, which need not necessarily be similar devices. For example, the short-range communications subsystem may include an infrared device and associated circuits and components, a Bluetooth™ communication module, a near filed communication (NFC) module or a millimeter wave (mm wave) short range communication module to provide for communication with similarly-enabled systems and devices.

In overview, given the scenario wherein two or more people are having a conversation and discover a need to schedule a meeting, one of the people may take on the role of meeting organizer. The meeting organizer of a to-be-scheduled meeting may arrange transmission, by the mobile communication device 100, of a request to the other potential participants in the to-be-scheduled meeting. Based on responses to the request, the microprocessor 128 may determine a common available time slot so that a meeting may be scheduled in the common available time slot.

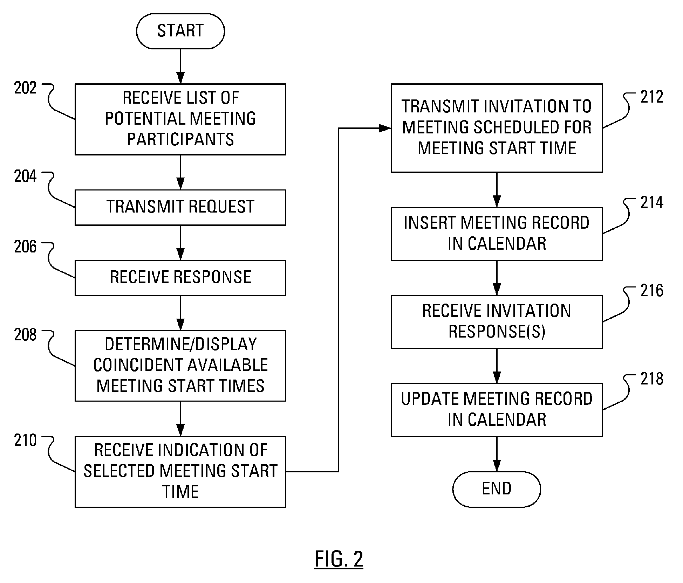

Example steps in a method of facilitating meeting scheduling are illustrated in FIG. 2. A user of the mobile communication device 100, hereinafter known as the meeting organizer, may activate the meeting scheduling module 130C. In one implementation, the meeting organizer activates the meeting scheduling module 130C by selecting a menu item in a menu available in the calendar aspect of the PIM application. Subsequent to activation of the meeting scheduling module 130C, the microprocessor 128 may receive (step 202), via a user interface, an indication of a selection of one or more potential participants in a meeting. The user interface may, for example, allow the meeting organizer to select, as potential participants, specific contact records in a contact database maintained by the PIM application on the mobile communication device 100. Alternatively or additionally, the user interface may, for example, allow the meeting organizer to enter contact information (e.g., e-mail address, mobile telephone number, device number for proprietary device-to-device messaging, instant messenger address, Twitter™ account name, Facebook™ account name, etc.).

Upon receiving an indication from the user interface that a list of potential participants has been finalized, and the list of potential participants, the microprocessor 128 transmits (step 204) a request to the other potential participants in the meeting. The request prompts a recipient device to formulate and return a response. The microprocessor 128 may transmit the request using a default communication transport, say, e-mail, if an address in the default communication transport is present in the contact record for each potential participant. In those cases for which an address in the default communication transport is not present in the contact record for a given potential participant, the microprocessor 128 may transmit the request using a subsequently ranked communication transport. Various communication transports may be ranked in a default manner. The manner in which communication transports are ranked may be configurable by the meeting organizer.

In one implementation, the communication transport may be Bluetooth™ or other protocol allowing for wireless very local communication, such as NFC or mm wave short range communication. Conveniently, transmitting (step 204) a request to potential participants over a very local wireless communication channel removes any requirement for a contact record to be maintained for the potential participants. That is, the meeting organizer can arrange transmission of availability requests to devices of people that the meeting organizer has just met. When the meeting organizer transmitting a request (step 204), using wireless very local communication, to recently met potential participants in a meeting, it should be clear that it becomes unnecessary for the microprocessor 128 to receive (step 202) an indication of a selection of one or more potential participants in a meeting. However, in the case wherein the mobile communication device 100 has discovered that several Bluetooth™ devices are available for communication, the microprocessor 128 to receive (step 202), via a user interface, an indication of a selection of one or more of the devices to which to transmit (step 204) a request.

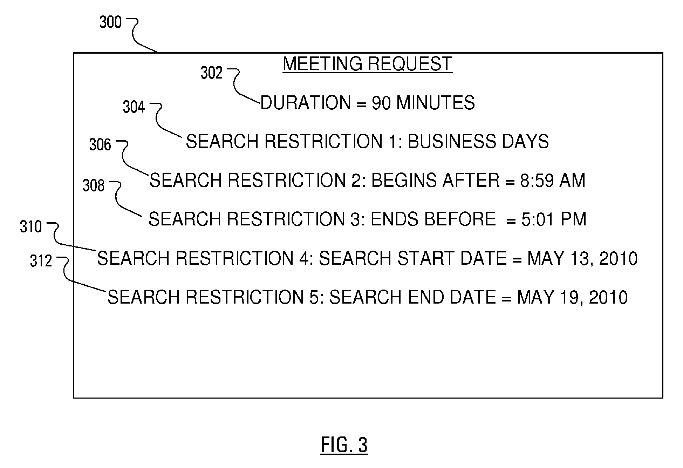

An example request format 300 is illustrated in FIG. 3. It should be understood that the example request format 300 provides example content, rather than file format. In an actual implementation, the request 300 may be expressed in an eXstensible Markup Language (XML) using standardized tags in a manner familiar to those of ordinary skill in the art.

The request 300 may indicate a proposed duration 302 for the meeting. Such a proposed duration may be expressed in absolute time (e.g., 90 minutes or 1.5 hours) or in quantity of time slots of the predetermined duration (e.g., three time slots, where the time slots have been predetermined to be 30 minutes in duration). The request 300 may also indicate temporal restriction criteria. A first search restriction 304 may limit the search to business days. A second search restriction 306 may limit the search to meeting start times after 8:59 AM. A third search restriction 308 may limit the search to meeting start times before 5:01 PM. A fourth search restriction 310 may limit the search to meeting start times on or after May 13, 2010. A fifth search restriction 312 may limit the search to meeting start times on or before May 19, 2010.

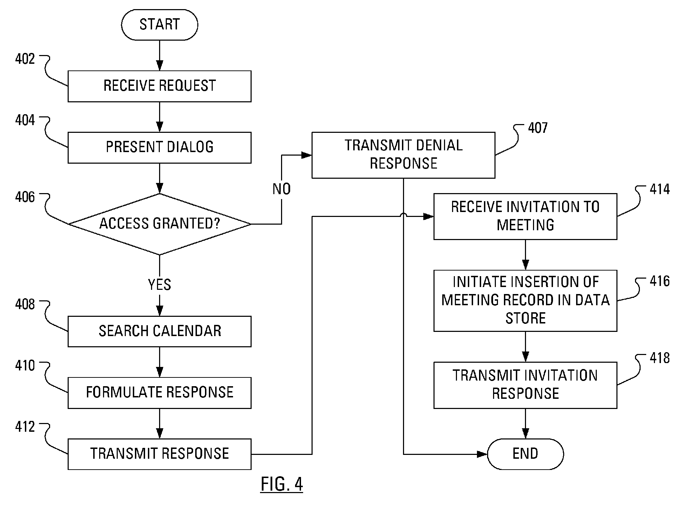

FIG. 4 illustrates example steps, carried out at a receiver device associated with an example one of the potential participants, in a method of responding to the request 300 transmitted in the method of FIG. 2. Responsive to receiving (step 402) the request 300, a meeting scheduling module executed on the receiver device may arrange (step 404) presentation of a dialog on the display 126 of the mobile communication device 100. The dialog may, for example, indicate that a request for access to calendar data has been received. The dialog may, for example, further provide options to the recipient to either grant access to the calendar data or deny access to the calendar data. The dialog may, for example, further provide an option to automatically grant or deny access to calendar data responsive to future requests.

Responsive to determining (step 406) that access to the calendar data has been denied, the meeting scheduling module may transmit (step 407) a denial response to the meeting organizer. The method of responding to the request 300 may then be considered to be complete.

Responsive to determining (step 406) that access to the calendar data has been granted, a meeting scheduling module executed on the receiver device may search (step 408) the local calendar records according to search restriction criteria specified in the request 300.

To conserve processing power and data transmission time, the search (step 408) may be limited such that the search may be considered complete upon locating a predetermined number of potential meeting start times, for example, five. Upon completion of the search, the receiver device may formulate (step 410) a response to the request 300. The response may include indications of one or a plurality of available recipient meeting start times.

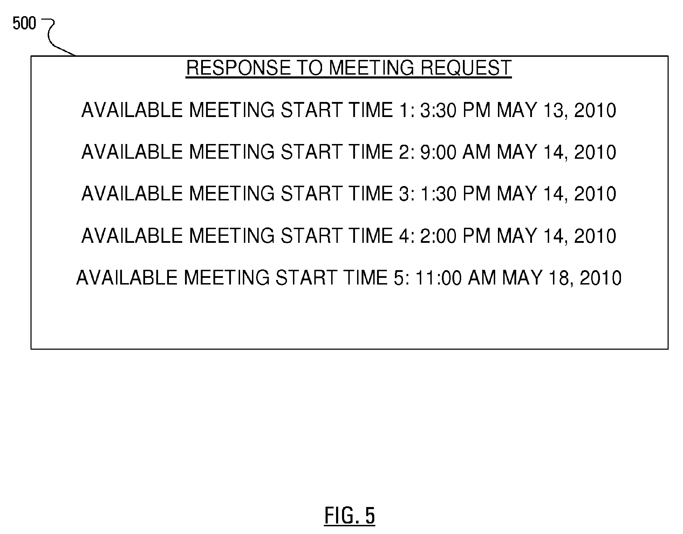

An example response format 500 is illustrated in FIG. 5. It should be understood that the example response format 500 provides example content, rather than file format.

The receiver device, upon completing the formulating (step 410) of the response 500, may then transmit (step 412) the response 500 to the meeting organizer. If the request was received by e-mail, the transmitting (step 412) may involve transmitting the response 500 in an e-mail message to an address associated with the meeting organizer. If the request was received by over a Bluetooth™ connection or other short range communication channels, the transmitting (step 412) may involve transmitting the response 500 over the same Bluetooth™ connection or the same short range communication channel.

The microprocessor 128 may receive (step 206, see FIG. 2) the response 500 and any other responses associated with each of other the potential participants in the meeting. Upon such receiving (step 206) the microprocessor 128 may determine (step 208) one or more meeting start times that are coincident among the potential participants in the meeting, including the meeting organizer. Such determining (step 208) may be based on the responses and the calendar events and appointments already scheduled and maintained by the PIM application on the mobile communication device 100.

As will be understood by those of skill in the art, the microprocessor 128 may determine (step 208) that there are no meeting start times that are common to each of the potential participants in the meeting, that none of the potential participants in the meeting have granted access to their respective calendar data or that a combination of these provides a result that no meeting start times are coincident. When there are no coincident available meeting start times, the microprocessor 128 may arrange (not shown) a presentation of a dialog informing the meeting organizer of this case. The meeting organizer may return to the start of the method and amend the list of potential participants or edit the search restriction parameters to broaden the search.

In the case wherein there are one or a plurality of coincident available meeting start times, the microprocessor 128 may arrange a presentation of the plurality of the coincident available meeting start times in the user interface, thereby providing the meeting organizer with an opportunity to select a meeting start time from among the plurality of coincident available meeting start times. Alternatively, rather than allowing the meeting organizer to select a meeting start time, the microprocessor 128 may automatically select the meeting start time.

The automatic selection of the meeting start time may be based on a set of parameters (soonest, earliest in the day, latest in the day) configured by the meeting organizer or by any of the potential participants. The automatic selection of the meeting start time may also occur responsive to the microprocessor 128 determining (step 208) there is only a single coincident available meeting start time.

Among configurable parameters may be a prioritization of days of the week. For example, Thursday may be associated with a higher priority parameter (day-of-week priority parameter) than priority parameters associated with Friday or Monday. The prioritization may manifest in automatic selection of the meeting start time or in the provision, to the meeting organizer, of the opportunity to select a meeting start time from among the plurality of coincident available meeting start times. That is, where Thursday is associated with a higher priority parameter, coincident available meeting start times on a Thursday are presented to the meeting organizer ranked ahead of coincident available meeting start times on other, lower priority days of the week. Such prioritization may also be applied at the level of time slots (time-of-day priority parameters) during a generic day or a particular day. In recognition that a meeting organizer or potential participant may prefer that no more meetings be scheduled for a specific day, the specific day can be associated with a very low priority parameter.

Upon receiving (step 210) an indication of a selected meeting start time, the microprocessor 128 may then, in a manner familiar to many calendar applications, arrange transmission (step 212) of a meeting invitation to each of the potential meeting participants, the meeting invitation specifying the selected meeting start time. The microprocessor 128 may also insert (step 214) a record in the calendar, where the record indicates the time and nature of the meeting and a list of potential participants that have been invited.

At the receiver device, the meeting invitation is received (step 414, see FIG. 4). Responsive to receiving (step 414) the meeting invitation, the receiver device may solicit (not shown) input from the user of the receiver device. Upon receiving confirmation that the meeting invitation is to be accepted, the receiver device may initiate (step 416) insertion of a corresponding meeting record in a calendar database (or, more generally, a data-store). The data-store may, for example, be associated with a local calendar application. The data-store may, for an additional example, be a associated with a remote calendar application. Indeed, the calendar database is often remote, even when accessed by a mobile communication device, and can have records added from sources other than the calendar application.

Such input solicitation and confirmation receiving may be accomplished via a user interface presented by the receiver device. Additionally, the receiver device may transmit (step 418) a response to the meeting invitation.

Upon receiving (step 216, FIG. 2) each response to the meeting invitation, the microprocessor 128 may update (step 218) the record in the calendar to indicate an attendance status of the potential participant represented by the response.

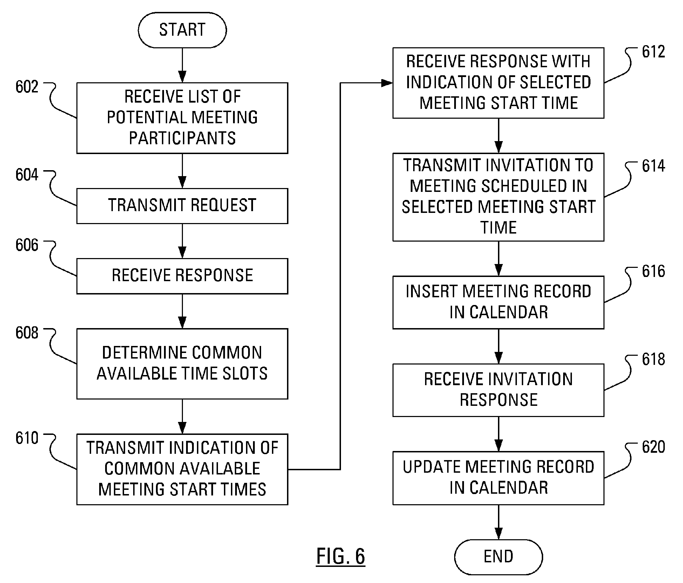

Example steps in an alternate method of facilitating meeting scheduling are illustrated in FIG. 6. When the list of potential participants in a meeting-to-be-scheduled includes only a single potential participant, further options are available.

The meeting organizer, may activate the meeting scheduling module 130C. Subsequent to activation of the meeting scheduling module 130C, the microprocessor 128 may receive (step 602), via a user interface, an indication of a selection of a single potential participant in a meeting. The user interface may, for example, allow the meeting organizer to select, as the single potential participant, a specific contact record in a contact database maintained by the PIM application on the mobile communication device 100. As described hereinbefore, the user interface may, for example, allow the meeting organizer to enter contact information. Alternatively, the user interface may, for example, allow the meeting organizer to select a device to which a Bluetooth™ communication channel has been established.

Upon receiving an indication of the single potential participant, the microprocessor 128 transmits (step 604) a request, such as the example request 300 of FIG. 3, to the single potential participant.

Upon receiving (step 606) a response, such as the example response 500 of FIG. 5, from the single potential participant, the microprocessor 128 may determine (step 608), based on the response and the calendar events and appointments maintained by the PIM application on the mobile communication device 100, a plurality of available meeting start times that are coincident for the single potential participant and for the meeting organizer.

The microprocessor 128 may arrange transmission (step 610), to the single potential participant, of an indication of the plurality of coincident available meeting start times. A meeting scheduling application executed at a device under control of the single potential participant may process the received indication and provide an opportunity for the single potential participant to select a meeting start time from among the plurality of coincident available meeting start times. Upon receiving an indication of a selected meeting start time, the device under control of the single potential participant may transmit a secondary response to the mobile communication device 100, where the secondary response includes an indication of the selected meeting start time.

Upon receiving (step 612) the secondary response including the indication of the selected meeting start time, the microprocessor 128 may then, in a manner familiar to many calendar applications, arrange transmission (step 614) of a meeting invitation to the single potential participant, the meeting invitation specifying the selected meeting start time. The microprocessor 128 may also initiate (step 616) insertion of a corresponding meeting record in a calendar database, where the meeting record indicates the time and nature of the meeting and the potential participant. Upon receiving (step 618) a response to the meeting invitation, the microprocessor 128 may update (step 620) the meeting record in the calendar database to indicate the status of the single potential participant.

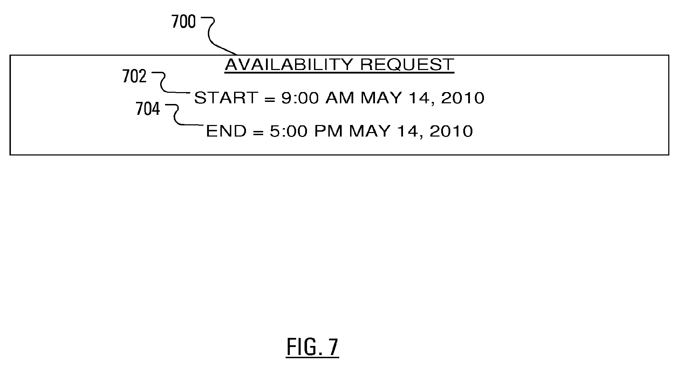

In an alternative implementation, the meeting organizer transmits (step 204), to a recipient, an availability request 700 (FIG. 7) that is distinct from the request 300 of FIG. 3. Instead of indicating a meeting duration and requesting possible meeting start times, the availability request 700 may merely set out a time frame start time and date 702 and a time frame end time and date 704. The availability request 700 may be treated, by a device under control of the recipient, as a request for the recipient's availability data during the time frame.

Responsive to determining (step 406, FIG. 4) that access to the calendar data has been granted, a meeting scheduling module executed on the receiver device may search (step 408) the local calendar records according to parameters specified in the availability request 700.

Upon completion of the search, the receiver device may formulate (step 410) an availability response to the availability request 700. The availability response may include indications of times of availability and times of non-availability.

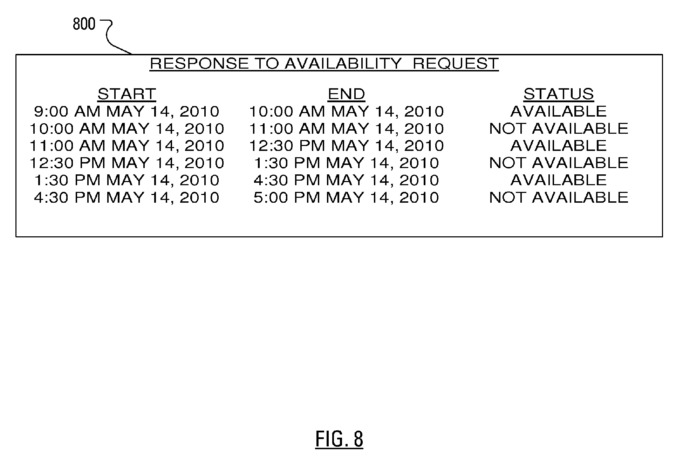

An example format for an availability response 800 is illustrated in FIG. 8. It should be understood that the availability response 800 provides example content, rather than file format. The availability response 800 indicates, for the time frame defined by start and end times and date in the availability request 700, start and end times for time periods of availability and non-availability. In the availability response 800 of FIG. 8, three time periods of availability are interspersed with three time periods of non-availability.

The receiver device, upon completing the formulating (step 410) of the availability response 800, may then transmit (step 412) the availability response 800 to the meeting organizer.

The microprocessor 128 may receive (step 206, see FIG. 2) the availability response 800. Upon such receiving (step 206) the microprocessor 128 may determine (step 208) one or more meeting start times that are coincident for the meeting organizer and the recipient. The microprocessor 128 may then carry out the remaining example steps of the method illustrated in FIG. 2, as described above.

Other aspects and features of the present disclosure will become apparent to those of ordinary skill in the art upon review of the following description of specific implementations of the disclosure in conjunction with the accompanying figures.

The above-described implementations of the present application are intended to be examples only. Alterations, modifications and variations may be effected to the particular implementations by those skilled in the art without departing from the scope of the application, which is defined by the claims appended hereto.

## Claims

1. An apparatus (100) comprising:
a communication subsystem (102) adapted to:
transmit a request, said request prompting a recipient to formulate and
return a response; and
receive said response, said response including an indication of an available recipient meeting time; and
a processor (128) adapted to:
determine a candidate meeting time, said candidate meeting time coincident with said available recipient meeting time and an available meeting organizer meeting time; and
initiate insertion of a meeting record into a data-store, said meeting record specifying said candidate meeting time.

2. The apparatus as claimed in claim 1 further comprising:
a display (126);
wherein said processor is further adapted to present said candidate meeting time on said display.

3. The apparatus as claimed in claim 2 wherein:
said indication references a plurality of available recipient meeting times;
said processor is further adapted to:
determine a plurality of candidate meeting times; and
present said plurality of candidate meeting times.

4. The apparatus as claimed in claim 3 wherein:
said processor is further adapted to receive an indication of a selected meeting time among said candidate meeting times; and
said communication subsystem is further adapted to transmit a meeting invitation, said meeting invitation specifying said selected meeting time.

5. The apparatus as claimed in any one of claims 1 to 4 wherein said request specifies:
a temporal restriction criterion for said available recipient meeting time; or
a meeting duration;

6. The apparatus as claimed in any one of claims 1 to 5 wherein said communication subsystem is further adapted to transmit said request over:
a Bluetooth connection;
a near field communication connection;
a millimeter wave short range communication connection; or
a cellular data connection.

7. A method of meeting scheduling, said method comprising:
transmitting a request, said request prompting a recipient device to formulate and return a response;
receiving said response, said response including an indication of an available recipient meeting time;
determining a candidate meeting time, said candidate meeting time coincident with said available recipient meeting time and an available meeting organizer meeting time; and
initiating insertion of a meeting record into a data-store, said meeting record specifying said candidate meeting time.

8. The method as claimed in claim 7 further comprising presenting said candidate meeting time.

9. The method as claimed in claim 8 wherein:
said indication includes a plurality of available recipient meeting times;
said determining includes determining a plurality of candidate meeting times; and
said presenting includes presenting said plurality of candidate meeting times.

10. The method as claimed in claim 9 further comprising:
receiving an indication of a selected meeting time among said candidate meeting times; and
transmitting a meeting invitation, said meeting invitation specifying said selected meeting time.

11. The method as claimed in claim 9 wherein said presenting said plurality of candidate meeting times comprises presenting a first candidate meeting time on a first day ranked ahead of a second candidate meeting time on a second day, where said first day is associated with a first priority parameter and said second day is associated with a second priority parameter and said first priority parameter indicates a higher priority than said second priority parameter.

12. The method as claimed in any one of claims 7 to 11 wherein said determining said candidate meeting time comprises basing said determining, in part, on:
day-of-week priority parameters; or
time-of-day priority parameters.

13. The method as claimed in any one of claims 7 to 12 wherein said request:
indicates a temporal restriction criterion for said available recipient meeting time; or
specifies a meeting duration.

14. The method as claimed in any one of claims 7 to 13 wherein said transmitting comprises transmitting said request over:
a Bluetooth connection;
a near field communication connection;
a millimeter wave short range communication connection; or
a cellular data connection.

15. A computer-readable medium (116, 118) containing computer-executable instructions that, when performed by a processor (128), cause said processor to carry out the method of any one of claims 7 to 14.

## Amended claims

### Amended claims in accordance with Rule 137(2) EPC.

**1.** An apparatus (100) comprising:
a communication subsystem (102) adapted to:
transmit a request, said request prompting a recipient to formulate and return a response; and
receive said response, said response including an indication of an available recipient meeting time, said indication referencing a plurality of available recipient meeting times; and
a processor (128) adapted to:
determine a plurality of candidate meeting times, said plurality of candidate meeting times coincident with at least some of said plurality of available recipient meeting times and a plurality of available meeting organizer meeting times;
present said plurality of candidate meeting times ranked according to a priority parameter;
receive an indication of a selected meeting time among said plurality of candidate meeting times; and
initiate insertion of a meeting record into a data-store, said meeting record specifying said selected meeting time.

**2.** The apparatus as claimed in claim 1 further comprising:
a display (126);
wherein said processor is further adapted to present said candidate meeting time on said display.

**3.** The apparatus as claimed in claim 2 wherein:
said communication subsystem is further adapted to transmit a meeting invitation, said meeting invitation specifying said selected meeting time.

**4.** The apparatus as claimed in any one of claims 1 to 3 wherein said request specifies:
a temporal restriction criterion for said available recipient meeting time; or
a meeting duration.

**5.** The apparatus as claimed in any one of claims 1 to 4 wherein said communication subsystem is further adapted to transmit said request over:
a Bluetooth connection;
a near field communication connection;
a millimeter wave short range communication connection; or
a cellular data connection.

**6.** A method of meeting scheduling, said method comprising:
transmitting a request, said request prompting a recipient device to formulate and return a response;
receiving said response, said response including an indication of an available recipient meeting time, said indication includes a plurality of available recipient meeting times;
determining a plurality of candidate meeting times, said plurality of candidate meeting times coincident with at least some of said plurality of available recipient meeting times and a plurality of available meeting organizer meeting times;
presenting said plurality of candidate meeting times ranked according to a priority parameter;
receiving an indication of a selected meeting time among said candidate meeting times; and
initiating insertion of a meeting record into a data-store, said meeting record specifying said selected meeting time.

**7.** The method as claimed in claim 6 further comprising presenting said candidate meeting time.

**8.** The method as claimed in claim 7 further comprising:
transmitting a meeting invitation, said meeting invitation specifying said selected meeting time.

**9.** The method as claimed in claim 8 wherein said presenting said plurality of candidate meeting times comprises presenting a first candidate meeting time on a first day ranked ahead of a second candidate meeting time on a second day, where said first day is associated with a first priority parameter and said second day is associated with a second priority parameter and said first priority parameter indicates a higher priority than said second priority parameter.

**10.** The method as claimed in any one of claims 6 to 9 wherein said determining said candidate meeting time comprises basing said determining, in part, on:
day-of-week priority parameters; or
time-of-day priority parameters.

**11.** The method as claimed in any one of claims 6 to 10 wherein said request:
indicates a temporal restriction criterion for said available recipient meeting time; or
specifies a meeting duration.

**12.** The method as claimed in any one of claims 6 to 11 wherein said transmitting comprises transmitting said request over:
a Bluetooth connection;
a near field communication connection;
a millimeter wave short range communication connection; or
a cellular data connection.

**13.** A computer-readable medium (116, 118) containing computer-executable instructions that, when performed by a processor (128), cause said processor to carry out the method of any one of claims 6 to 12.
